# EUROPÄISCHE PATENTANMELDUNG

(11) **EP 1 039 491 A2**
(43) Veröffentlichungstag der Anmeldung: **27.09.2000**
(21) Anmeldenummer: 00105437.8
(22) Anmeldetag: 15.03.2000
(51) Int. Cl.: H01G 2/08

(54) **Kühlvorrichtung für eine Kondensatorbatterie**

(30) Priorität: 19.03.1999 DE 19912394
(71) Anmelder: DaimlerChrysler AG, 70567 Stuttgart (DE)
(72) Erfinder: Brunner, Nicol, 5417 Untersiggenthal (CH)
(74) Vertreter: Gmeiner, Christa, c/o DaimlerChrysler AG

(57) **Zusammenfassung**

Es wird eine Kühlvorrichtung für eine Kondensatorbatterie angegeben, die Kondensatoren (6) an ihren gleichartig gepolten Kondensatorelektroden (1) mittels jeweils eines Verschienungsstranges (7) elektrisch zu einer Parallelschaltung verbindet, wobei die Verschienungsstränge (7) für auf einer einzigen Kondensatorfläche (8) eines jeden Kondensators (6) angeordneten Kondensatorelektroden (1) zusammen eine wesentlich geringere Breite B_{K} aufweisen, als eine durch die Kondensatoren (6) senkrecht zu einer Längsachse (X-X) festgelegte Breite B_{B} der Kondensatorbatterie. Für Kondensatoren (6) mit auf verschiedenen Kondensatorflächen (8) eines jeden Kondensators (6) angeordneten Kondensatorelektroden (1) weist jeder einzelne Verschienungsstrang (7) eine wesentlich geringere Breite B_{S} auf, als eine durch die Kondensatoren (6) senkrecht zur Längsachse (X-X) festgelegte Breite B_{B} der Kondensatorbatterie.

## Beschreibung

### Technisches Gebiet

Die Erfindung bezieht sich auf das Gebiet der Kühltechnik. Insbesondere betrifft die Erfindung eine Kühlvorrichtung für eine Kondensatorbatterie.

### Stand der Technik

Elektrische Bauteile, insbesondere Kondensatoren einer Kondensatorbatterie für leistungselektronische Anwendungen im Traktionsbereich, benötigen ein Kühlsystem zur Abfuhr der in den Kondensatoren auftretenden Verlustwärme. Gängigerweise werden dann Kondensatorbatterien über einen Lüfter, der eine Luftströmung erzeugt, gekühlt. Dabei wird jedoch nur wenig Wärme abgeführt, so dass die Kondensatorbatterie nur bis zu einer Leistung betrieben werden kann, bei der die innere zulässige Temperatur der Kondensatoren nicht überschritten wird. Zudem erfordert eine Luftkühlung spezielle Massnahmen zur Luftaufbereitung und Wartung. Für die im Traktionsbereich vorhandene Leistungdichte reicht somit eine gängige Luftkühlung der Kondensatoren einer Kondensatorbatterie nicht aus, um die anfallende Verlustwärme abzuführen, so dass Kühler mit flüssigen Kühlmedien eingesetzt werden. Eine gattungsgemässe Kühlvorrichtung wird in der US 5,812,365 beschrieben. Darin ist eine Kondensatorbank offenbart, bei der gleiche Elektrodenpole der eingesetzten Kondensatoren mit jeweils einem Verschienungsstrang mit Schrauben verbunden sind und so eine Parallelschaltung der Kondensatoren bilden. Die Verschienungsstränge sind parallel angeordnet und jeweils von einem Kühlkanal durchzogen, in dem ein flüssiges Kühlmedium zirkuliert, das die Verlustwärme abtransportiert.
Bedingt durch den Einsatz der Kühlvorrichtung nach US 5,812,365 bis zu einer Frequenz von 400 kHz ist ein induktionsarmer Aufbau in der gezeigten Form notwendig, bei der die Breite, die die beiden Verschienungsstränge bilden, weit über die Breite der gesamten in der Kondensatorbank eingesetzten Kondensatoren hinausgehen. Für die im Traktionsbereich einzusetzenden Kondensatorbatterien ist jedoch eine geringe Baugrösse gefordert, insbesondere für die Kühlvorrichtung der Kondensatorbatterie. Die in der US 5,812,365 offenbarte Kühlvorrichtung ist deshalb für den Einsatz im Traktionsbereich mit den geforderten kleinen Einbaugrössen nicht geeignet.

Desweiteren umfassen Traktionsanwendungen ausser den zu kühlenden Kondensatorbatterien weitere Bauteile, wie beispielsweise leistungselektronische Halbleiterschalter eines eingesetzten Stromrichters, die ebenfalls gekühlt werden müssen. Aufgrund der sehr eingeschränkten Platzverhältnisse ist es notwendig, dass so wenig wie möglich separate, untereinander unabhängige Kühlkreisläufe betrieben werden, da ansonsten aufwendige Pumpsysteme mit zugehöriger Infrastruktur mehrfach zur Verfügung gestellt werden müssen.

### Darstellung der Erfindung

Es ist deshalb Aufgabe der vorliegenden Erfindung, eine Kühlvorrichtung für eine Kondensatorbatterie anzugeben, die äusserst platzsparend und mit minimalem Materialaufwand ausgeführt ist. Diese Aufgabe wird durch die Merkmale der unabhängigen Ansprüche gelöst. Weitere vorteilhafte Ausgestaltungen der Erfindung sind im Unteranspruch angegeben.

Die erfindungsgemässe Kühlvorrichtung für eine Kondensatorbatterie umfasst jeweils einen Verschienungsstrang, der einen Kühlkanal, in dem ein Kühlmittel zirkuliert, aufweist und der gleichartig gepolte Kondensatorelektroden eingesetzter Kondensatoren der Kondensatorbatterie miteinander zu einer Parallelschaltung elektrisch verbindet. Sehr vorteilhaft ist, dass die Verschienungsstränge, im Falle der auf einer einzigen Kondensatorfläche eines jeden Kondensators angeordneten Kondensatorelektroden, eine wesentlich geringere Breite aufweisen, als eine durch die Kondensatoren senkrecht zu einer Längsachse festgelegte Breite der Kondensatorbatterie. Für den Fall, dass die Kondensatorelektroden auf verschiedenen Stirnseiten eines jeweiligen Kondensators angeordnet sind, weist der jeweilige Verschienungsstrang vorteilhaft eine geringere Breite auf, als die durch die Kondensatoren senkrecht zur Längsachse festgelegte Breite der Kondensatorbatterie. Dadurch wird erfindungsgemäss ein sehr platzsparender Aufbau der Kühlvorrichtung für eine Kondensatorbatterie erreicht, wie dies für Traktionsanwendungen gefordert ist. Ausserdem kann der Materialaufwand, das Gewicht und die daraus resultierenden Kosten durch den erfindungsgemässen Aufbau der Kühlvorrichtung gering gehalten werden.

Zusätzlich kann die Kühlvorrichtung die Funktion einer Kühlmittelverteilung übernehmen, indem sie erfindungsgemäss mindestens drei Kühlmittelanschlüsse aufweist, wobei zwei Kühlmittelanschlüsse Kühlmittelverteilanschlüsse sind. Dadurch ist es sehr einfach möglich, die Kühlvorrichtung an ein bereits vorhandenes Kühlsystem, beispielsweise für leistungselektronische Halbleiterschalter eines eingesetzten Stromrichters, anzuschliessen, so dass auf ein zusätzliches unabhängiges Kühlsystem verzichtet werden kann. Von der Kühlvornichtung können dann sehr vorteilhaft mittels der Kühlmittelverteilanschlüsse weitere zu kühlende Elemente versorgt werden.

### Kurze Beschreibung der Zeichnung

Nachfolgend wird die Erfindung anhand von Ausführungsbeispielen im Zusammenhang mit der Zeichnung näher erläutert.

Es zeigen
- **Fig. 1a**: eine Vorderansicht eines Ausführungsbeispiels einer Kühlvorrichtung für eine Kondensatorbatterie mit auf einer einzigen Kondensatorfläche angeordneten Kondensatorelektroden,
- **Fig. 1b**: eine Darstellung des Ausführungsbeispiels der Kühlvorrichtung nach Fig. 1a in der Draufsicht,
- **Fig. 2a**: eine Vorderansicht eines weiteren Ausführungsbeispiels einer Kühlvorrichtung in für eine Kondensatorbatterie für Kondensatoren mit auf verschiedenen Kondensatorflächen angeordneten Kondensatorelektroden,
- **Fig. 2b**: eine Darstellung des Ausführungsbeispiels der Kühlvorrichtung nach Fig.2a in der Draufsicht.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

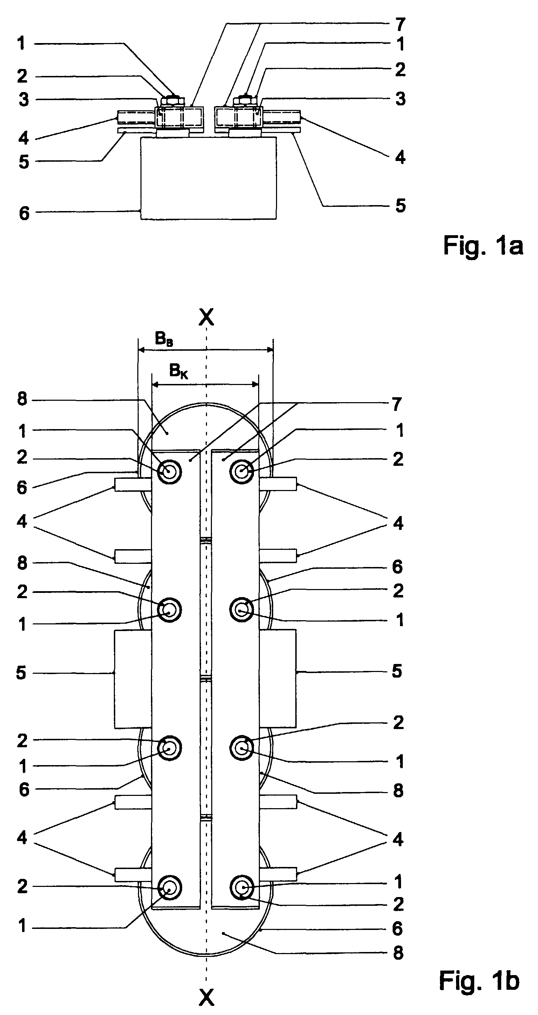

In Fig. 1a ist ein erfindungsgemässes Ausführungsbeispiel der Kühlvorrichtung für eine Kondensatorbatterie in der Vorderansicht dargestellt. Die Kondensatorbatterie umfasst mindestens zwei Kondensatoren 6, wobei jeder Kondensator 6 zwei Kondensatorelektroden 1 aufweist und diese gemäss Fig. 1a auf einer einzigen Kondensatorfläche 8 angeordnet sind. Die Kondensatoren 6 sind gemäss Fig. 1b, die eine Draufsicht des Ausführungsbeispiels gemäss Fig. 1a zeigt, in Richtung einer Längsachse X-X angeordnet. Die Kondensatorelektroden 1 sind so ausgeführt, dass daran mittels lösbarer Befestigungsmittel 2 eine Verschienung angebracht werden kann. Die Kondensatoren 6 sind an ihren gleichartig gepolten Kondensatorelektroden 1, das heisst jeweils an ihren Plus-Polen und an ihren Minus-Polen der Kondensatoren 6, mit Hilfe jeweils eines Verschienungsstranges 7 zu einer Parallelschaltung elektrisch leitend verbunden. Jeder der beiden Verschienungsstränge 7 weist dabei einen Kühlkanal 3 auf, in dem ein Kühlmittel zirkuliert. Durch diese Verschienung der Kondensatoren an ihren gleichartig gepolten Kondensatorelektroden 7 mittels der Verschienungsstränge 7 wird in sehr einfacher und effizienter Weise die in den Kondensatoren auftretende Verlustwärme über die Kondensatorelektroden 1 an die gekühlten Verschienungsstränge abgegeben. Jeder Verschienungsstrang 7 umfasst desweiteren einen elektrischen Anschluss 5, mit dem die Kondensatorbatterie, je nach Einsatzgebiet, an nicht dargestellte elektrische und/oder mechanische Bauteile angeschlossen werden kann.
Die erfindungsgemässen Verschienungsstränge 7 in Fig. 1b sind für Kondensatoren 6 mit auf einer einzigen Kondensatorfläche 8 angeordneten Kondensatorelektroden 1 so ausgeführt, dass sie zusammen eine wesentlich geringere Breite B_{K} haben, als eine durch die Kondensatoren 6 senkrecht zur Längsachse X-X festgelegte Breite B_{B} der Kondensatorbatterie. Diese Ausführungsform der Kühlvorrichtung hat den Vorteil, dass sie extrem platzsparend aufgebaut ist, wie dies insbesondere für den Einsatz im Traktionsbereich erforderlich ist. Darüberhinaus ist für den Aufbau ein nur geringer Materialaufwand notwendig, woraus als zusätzlicher Vorteil ein sehr geringes Gewicht resultiert. Als weiterer Vorteil dieses Ausführungsbeispiels der Kühlvorrichtung ist zu sehen, dass die Verschienungsstränge eine tragende Funktion der gesamten Kondensatorbatterie übernehmen, so dass auf stabilisiernde Mittel zwischen den Kondensatoren verzichtet werden kann.

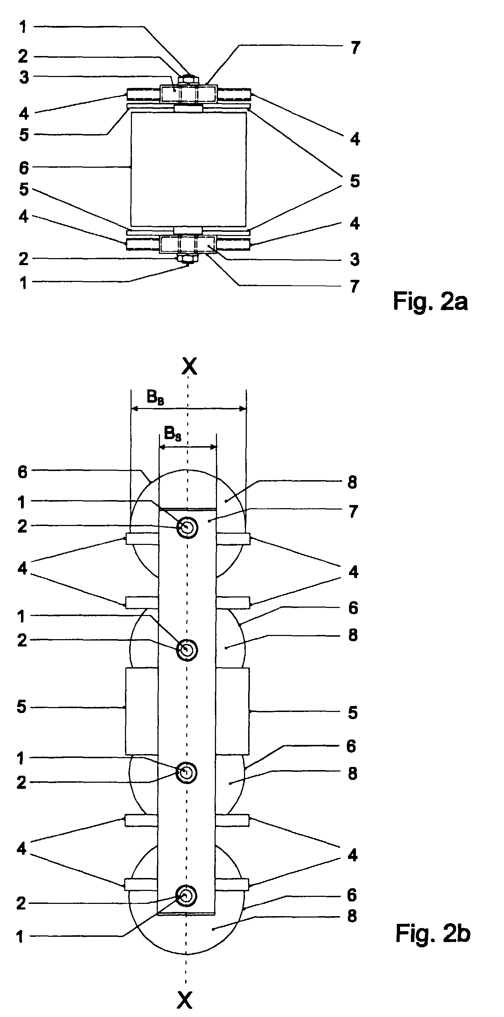

Ein weiteres Ausführungsbeispiel ist in Fig. 2a in der Vorderansicht gezeigt. Fig. 2b zeigt das Ausführungsbeispiel gemäss Fig. 2a in der Draufsicht. Darin umfasst die Kondensatorbatterie Kondensatoren 6, die in Richtung der Längsachse X-X angeordnet sind. Bei den Kondensatoren sind die Kondensatorelektroden 1 eines jeden Kondensators 6 auf verschiedenen Kondensatorflächen 8 angeordnet. Wie schon im Ausführungsbeispiel in Fig. 1a und Fig. 1b gezeigt, sind gemäss Fig. 2b in der Draufsicht von Fig. 2a die gleichartig gepolten Kondensatorelektroden 1 über jeweilige Verschienungsstränge 7 miteinander elektrisch leitend zu einer Parallelschaltung verbunden. Vorteilhaft bei dem in Fig. 2a und Fig.2b gezeigten Ausführungsbeispiel der Kühlvorrichtung wirkt sich aus, dass, bedingt durch die Anordnung der unterschiedlich gepolten Kondensatorelektroden 1 der eingesetzten Kondensatoren 6 genau auf gegenüberliegenden Kondenstorflächen 8 angeordnet sind, die an den gleichartig gepolten Kondensatorelektroden 1 angeordneten Verschienungsstränge 7 eine weitere Verbesserung der Stabilität der gesamten Kondensatorbatterie bewirken. Für eine derartige Anordnung der Kondensatorbatterie mit der erfindungsgemässen Kühlvorrichtung kann auf zusätzliche, mechanisch stabilisierende Bauelemente gänzlich verzichtet werden.
Die erfindungsgemässen Verschienungsstränge 7 in Fig. 2b sind für Kondensatoren 6 mit auf verschiedenen Kondensatorflächen 8 angeordneten Kondensatorelektroden 1 so ausgeführt, dass jeder einzelne Verschienungsstrang 7 eine wesentlich geringere Breite B_{S} hat, als eine durch die Kondensatoren 6 senkrecht zur Längsachse X-X festgelegte Breite B_{B} der Kondensatorbatterie. Die bereits für das Ausführungsbeispiel gemäss Fig. 1a und Fig. 1b genannten Vorteile des platzsparenden Aufbaus und die daraus resultierende Ersparnis bezogen auf Material und Gewicht gilt auch für das Ausführungsbeispiel gemäss Fig. 2a und Fig. 2b.

Mit Hilfe der in den Ausführungsbeispielen gemäss den Fig. 1a bis 2b gezeigten erfindungsgemässen Kühlvorrichtung ist es durch Ausdehnung der Verschienungsstränge 7 in Richtung der Längsachse X-X denkbar, beliebig viele Kondensatoren 6 elektrisch parallelzuschalten. Dies erhöht die Flexibilität in der Festlegung und Einstellung von Kapazitätswerten der Kondensatorbatterie.

In den Ausführungsbeispielen gemäss den Fig.en 1a bis 2b umfasst der Verschienungsstrang weiterhin 7 mindestens drei Kühlmittelanschlüsse 4, wobei mindestens zwei davon Kühlmittelverteilanschlüsse sind. Die Kühlmittelanschlüsse 4 sind so ausgeführt, dass gängige Kühlmittelschläuche und/oder Kühlmittelleitungen angeschlossen werden können. Daraus ergeben sich Vorteile, dass nämlich die Kühlvorrichtung in besonders einfacher Weise an ein bereits bestehendes Kühlsystem anschliessbar ist, wie es beispielsweise bei Traktionsanwendungen für darin eingesetzte leistungselektronische Halbleiterschalter eines Stromrichters vorliegt. Somit kann auf ein zusätzlich unabhängiges Kühlsystem mit der notwendigen aufwendigen Infrastruktur wie Pumpen, Ausgleichsbehälter usw. verzichtet werden. Desweiteren kann die erfindungsgemässe Kühlvorrichtung mittels der als Kühlmittelverteilanschlüsse ausgeführten Kühlmittelanschlüsse 4 eine Funktion der Verteilung des Kühlmittels übernehmen und somit zusätzlich zu kühlende Elemente versorgen. Dadurch lässt sich eine aufwendige Kühlmittelverteilvorrichtung einsparen.

### Bezugszeichenliste

- 1: Kondensatorelektrode
- 2: lösbare Befestigungsmittel
- 3: Kühlkanal
- 4: Kühlmittelanschluss
- 5: elektrischer Anschluss
- 6: Kondensator
- 7: Verschienungsstrang
- 8: Kondensatorfläche

## Patentansprüche

1. Kühlvorrichtung für eine Kondensatorbatterie, wobei die Kondensatorbatterie mindestens zwei Kondensatoren (6) mit jeweils zwei auf einer einzigen Kondensatorfläche (8) angeordneten Kondensatorelektroden (1) aufweist und die Kondensatoren (6) in Richtung einer Längsachse (X-X) angeordnet sind und über jeweils einen Verschienungsstrang (7), der einen Kühlkanal (3) umfasst und in dem ein Kühlmittel zirkuliert, an ihren gleichartig gepolten Kondensatorelektroden (1) mittels lösbarer Befestigungsmittel (2) zu einer Parallelschaltung elektrisch leitend verbunden sind, wobei die Verschienungsstränge (7) zusammen eine wesentlich geringere Breite B_{K} aufweisen, als eine durch die Kondensatoren (6) senkrecht zur Längsachse (X-X) festgelegte Breite B_{B} der Kondensatorbatterie.

2. Kühlvorrichtung für eine Kondensatorbatterie, wobei die Kondensatorbatterie mindestens zwei Kondensatoren (6) mit jeweils zwei auf verschiedenen Kondensatorflächen (8) angeordneten Kondensatorelektroden (1) aufweist und die Kondensatoren (6) in Richtung einer Längsachse (X-X) angeordnet sind und über jeweils einen Verschienungsstrang (7), der einen Kühlkanal (3) umfasst und in dem ein Kühlmittel zirkuliert, an ihren gleichartig gepolten Kondensatorelektroden (1) mittels lösbarer Befestigungsmittel (2) zu einer Parallelschaltung elektrisch leitend verbunden sind, wobei jeder einzelne Verschienungsstrang (7) eine wesentlich geringere Breite B_{S} aufweist, als eine durch die Kondensatoren (6) senkrecht zur Längsachse (X-X) festgelegte Breite B_{B} der Kondensatorbatterie.

3. Kühlvorrichtung nach Anspruch 1 oder 2, dadurch gekennzeichnet, dass der Verschienungsstrang (7) mindestens drei Kühlmittelanschlüsse (4) aufweist, wobei mindestens zwei davon Kühlmittelverteilanschlüsse sind.
